# EUROPEAN PATENT SPECIFICATION

(11) **EP 3 524 648 B1**
(45) Date of publication and mention of the grant of the patent: **20.09.2023**
(21) Application number: 19154353.7
(22) Date of filing: 29.01.2019
(51) Int. Cl.: C09D 11/101, B32B 7/12

(54) **TRANSFER OF UV PRINT ONTO CURVED SURFACES WITH STRETCHABLE UV INKS**
TRANSFER VON UV-DRUCK AUF GEKRÜMMTE OBERFLÄCHEN MIT DEHNBAREN UV-TINTEN
TRANSFERT D'IMPRESSION UV SUR DES SURFACES INCURVÉES AVEC ENCRES UV ÉTIRABLES

(30) Priority: 07.02.2018 US 201815890527
(43) Date of publication of application: 14.08.2019
(73) Proprietor: Xerox Corporation, Webster, NY 14580 (US)
(72) Inventor: LIU, Chu-heng, Penfield, NY New York 14526 (US); MCCONVILLE, Paul J., Webster, NY New York 14580 (US); LEFEVRE, Jason M., Penfield, NY New York 14526 (US); PRAHARAJ, Seemit, Webster, NY New York 14580 (US); HERRMANN, Douglas K., Webster, NY New York 14580 (US)
(74) Representative: Gill Jennings & Every LLP

(56) References cited:
- EP-A1- 1 882 582
- WO-A1-2013/019821
- US-A1- 2011 189 477

## Description

The exemplary embodiment relates to printing on the surfaces of three-dimensional objects and finds particular application in connection with a system and method for transferring images formed from radiation curable inks to such objects.

Radiation curable inks, such as UV-curable inks, generally include at least one curable monomer, a colorant, and a radiation activated initiator, which initiates polymerization of curable components of the ink, specifically of the curable monomer. Such inks has been used to apply images to two-dimensional surfaces, such as sheets of paper or plastic. Printing devices have also been developed for direct printing on three-dimensional objects. However, these are limited to printing of small objects which can fit inside the printer. Transfer printing methods have been developed for applying images to surfaces outside the printer, but these have been limited to generally flat surfaces since the image typically cannot change its dimension during transfer.

There remains a need for a method for transfer printing of three-dimensional objects that are not suited to direct printing methods.

The following references are mentioned:
The following describe UV-curable inks and applications: U.S. Pub. No. 20100055484, published March 4, 2010, entitled ULTRA-VIOLET CURABLE GELLANT INKS FOR THREE-DIMENSIONAL PRINTING AND DIGITAL FABRICATION APPLICATIONS, by Chretien, et al. U.S. Pub. No. 20100331478, published December 30, 2010, entitled RADIATION CURABLE INKJET PRINTING METHODS, by Claes; U.S. Pub. No. 20110069130, published March 24, 2011, entitled MULTIFUNCTIONAL TYPE II PHOTOINITIATORS AND CURABLE COMPOSITIONS, by Loccufier, et al.; U.S. Pub. No. 20120037026, published February 16, 2012, entitled ELECTROSTATIC DIGITAL OFFSET/FLEXO PRINTING, by Law, et al.; U.S. Pub. No. 20120129972, published May 24, 2012, entitled HIGH ELONGATION THERMOFORMING INK-JET INK, by Hall, et al.; U.S. Pub. No. 20130100221, published April 25, 2013, entitled RADIATION CURABLE INKJET PRINTING METHODS, by Van Dyck, et al.; U.S. Pub. No. 20150050427, published February 19, 2015, entitled CURABLE LIQUIDS AND INKS FOR TOYS AND FOOD PACKAGING APPLICATIONS, by Claes, et al.

Stretchable ink compositions are described, for example, in U.S. Pub. No. 20140220315, published August 7, 2014, entitled HIGH-STRETCH ENERGY CURABLE INKS & METHOD OF USE IN HEAT TRANSFER LABEL APPLICATIONS, by Zhang, et al., and U.S. Pub. No. 20130337237, published December 19, 2013, entitled STRETCHABLE INK COMPOSITION, by Yiliang Wu, et al.

In accordance with one aspect of the exemplary embodiment, a stretchable multi-layer assembly for transfer-printing an associated curved object includes a stretchable carrier which defines a first outer surface of the assembly. A stretchable image is supported on the carrier. The multi-layer assembly includes an adhesive second outer surface defined by at least one of the stretchable image and an adhesive layer. The carrier and the stretchable image are penetrable to radiation that cures the adhesive second outer surface for securing the assembly to an associated object.

In accordance with another aspect of the exemplary embodiment, a transfer-printed object includes an object and the assembly described above.

In accordance with another aspect of the exemplary embodiment, a method of forming a transfer-printed object includes providing a multi-layer assembly as described above, stretching the multi-layer assembly, applying the multi-layer assembly to an object, curing at least one of the adhesive layer and the stretchable image with radiation through the carrier and after the curing, removing the carrier.

In accordance with another aspect of the exemplary embodiment, a method of forming a multi-layer assembly includes providing a stretchable carrier, forming a stretchable image layer on the stretchable carrier, and providing the multi-layer assembly with an adhesive outer surface. The carrier and the image layer are penetrable to radiation that cures the adhesive outer surface for securing the assembly to an object.

In accordance with another aspect of the exemplary embodiment, a stretchable multi-layer assembly for transfer-printing an object includes a UV-curable stretchable image layer and a UV-transmissive stretchable carrier which supports the image layer. The carrier includes a release liner, which defines a first outer surface of the assembly, and a water soluble or water dispersible sacrificial release layer, intermediate the release liner and the stretchable image layer. The multilayer assembly includes a second surface defined by at least one of the stretchable image layer and an adhesive layer. The second surface is curable by UV radiation passing through the stretchable carrier and stretchable image layer.
FIGURE 1 is a cross-sectional view of a transfer-printed object in accordance with one aspect of the exemplary embodiment;
FIGURE 2 is a cross sectional view of a release liner with a sacrificial release layer thereon;
FIGURE 3 illustrates the structure of FIGURE 2 with a stretchable UV image thereon;
FIGURE 4 illustrates the structure of FIGURE 3 with an adhesive layer and second liner thereon;
FIGURE 5 is a cross-sectional view of a transfer-printed object in accordance with another aspect of the exemplary embodiment;
FIGURE 6 is a cross-sectional view of a transfer-printed object in accordance with another aspect of the exemplary embodiment;
FIGURE 7 is a cross-sectional view of a transfer-printed object in accordance with another aspect of the exemplary embodiment; and
FIGURE 8 is a flow chart illustrating a method for forming a transfer-printed object in accordance with another aspect of the exemplary embodiment.

Aspects of the exemplary embodiment relate to a transfer-printed object, a multi-layer transfer assembly, and a method of transfer printing suitable to printing images onto curved objects.

The exemplary stretchable transfer process allows a printed image to be applied to a curved surface. In various aspects, a stretchable/UV transparent liner is printed with a UV curable image formed of stretchable ink, followed by a clear partially-cured UV adhesive overcoat layer. This image assembly (liner, image and the adhesive layer) is then stretched and pressed against the object surface, while a full power UV exposure is applied through the structure to cause the image to stick to the object. Finally, the liner is peeled off. The ability to partially cure the UV inks provides a stretchable feature to the assembly and the use of a UV-transparent liner as a transfer sheet for transferring the image provides the ability to fully cure the image layer after it is attached to the object. Some advantages include the ability to apply and stretch printed images onto non-linear surfaces. Unlike current transfer sheet technology, stretchable materials are used for all layers thereby making them able to conform to any surface, and not limited to planar or curvilinear surfaces.

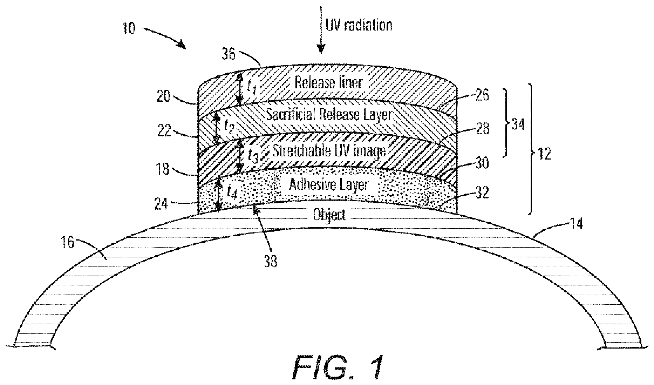

FIGURE 1 illustrates a cross-sectional view of a transfer-printed object **10** in accordance with one aspect of the exemplary embodiment. The transfer-printed object **10** includes a multilayer assembly **12**, which is mounted to a surface **14** of an object **16**, which in the illustrated embodiment is curved. The multilayer assembly **12** includes a stretchable image layer **18**. The image layer **18** is protected, during transfer to the object **16**, by a stretchable and radiation-transmissive (e.g., UV-transmissive) release liner **20**. The release liner **20** may be coated with a stretchable, radiation-transmissive (e.g., UV-transmissive) sacrificial release layer **22**. The multilayer assembly **12** may further include an adhesive layer **24,** intermediate the object **16** and the layer **18**.

The surface **14** of the object **16** may be curved (non-planar), e.g., have a radius of curvature (in the region where the assembly **12** is applied) of up to 1 meter, such as at least 0.5 cm or up to 50 cm, or up to 10 cm. The object may be formed of plastic, rubber, wood, metal, glass, woven and nonwoven fabrics, or a combination thereof.

Examples of curved objects **16** include bottles, such as water bottles, toys and sporting goods, such as balls, sticks, bats, helmets, vehicles, such as cars, and the like.

In the embodiment of FIGURE 1, a first interface **26** is defined between contacting layers **20** and **22**, a second interface **28** is defined between contacting layers **22** and **18**, a third interface **30** is defined between contacting layers **18** and **24**, and a fourth interface **32** is defined between layer **24** and the surface **14** of the object **16**. The release liner **20** and sacrificial release layer **22** together serve as a UV-transmissive carrier **34** for supporting the image layer **18** and adhesive layer **24** thereon. The release liner **20**/carrier **34** defines a first outer surface **36** of the assembly 12, prior to removal of the carrier. A second outer surface **38** of the assembly **12** may be defined by the adhesive layer **24**, immediately prior to application of the assembly **12** to the object. The multilayer assembly **12** may include fewer, more, or different layers from layers **20**, **22**, **18**, and **24**, as exemplified in other embodiments described below.

By "stretchable," it is meant that the respective layer **20**, **22**, **18**, or **24**, and/or the assembly **12** as a whole, can be stretched to at least 120%, or at least 140% of its length and/or width (perpendicular to its length), without breaking, while being applied to a three-dimensional object **16**, i.e., prior to final curing, such as at least 150%, or at least 200%, or at least 300% of its length and/or width.

By "UV-transmissive," it is meant that the respective layer can be penetrated by UV radiation (defined as electromagnetic radiation with a wavelength from 10 nm to 400 nm, e.g. 200-400 nm) from a UV-emitting source, such as a UV LED to enable UV-curing of lower layer(s) in the assembly **12**, in a suitable time period, such as under 10 minutes or under 5 minutes.

The stretchable release liner **20** may be transparent to radiation used in curing the image layer **18**, in particular, ultraviolet (UV)-transparent. For example, the release liner **20** may be a stretchable and UV-transparent liner, such as a thin film comprising or predominantly (i.e., over 50 wt. %, or at least 70 wt. %, or at least 90 wt. %) a polyalphaolefin, polyvinyl alcohol (PVOH), polyvinyl acetate (PVA), natural rubber latex or synthetic polyisoprene, or combination thereof. Other elastomeric materials may be used. In some embodiments, the liner is water-soluble (e.g., PVOH). In some embodiments, the polyalphaolefin is a polymer/copolymer of ethylene and/or propylene, such as one with at least 50 wt % or at least 90 wt % ethylene. A low density polyethylene (LDPE, including VLPDE) with a density of below 0.94 g/cm³, or below 0.91 g/cm³, may be used for the liner, such as a density of at least 0.88 g/cm³, or least 0.885 g/cm³.

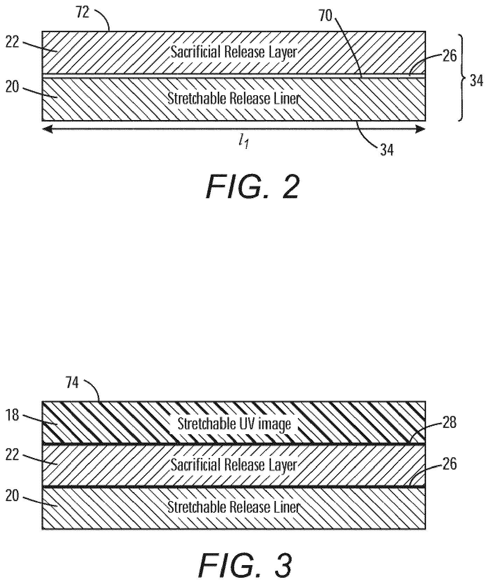

The liner layer **20** may have a thickness *t*₁ of, for example, from 10 µm to 100 µm, such as up to 50 µm, or up to 40 µm, or up to 30 µm. The liner may have a length *l*₁ (FIG. 2) and or/width of any suitable dimension for supporting the other layers **18**, **22**, **24**, such as from 2-50 cm.

The sacrificial release layer **22** may be transparent to radiation used in curing the image layer **18**, e.g., UV-transparent, and stretchable. The layer **22** may have a thickness *t*₂ of 0.1 µm to 50µm and a length of ≤ *l*₁. The sacrificial release layer **22** may be removed, after transfer, by dissolution/dispersion in a suitable liquid medium, such as water, and/or by thermal degradation. For example, the sacrificial release layer **22** may be a water soluble, water-dispersible, or water swellable layer. Examples of suitable release layers **22** include a film formed from (or consisting essentially of) a polymer resin, such as poly(vinyl alcohol) (PVOH), poly(vinyl acetate) (PVAC), polyvinyl pyrrolidone (PP), combination thereof, or the like. As an example, a water-soluble glue such as Elmer's^{®} glue (primarily PVAC) may be used, which is water-soluble when dry. The sacrificial release layer **22** may also contain, as optional ingredients, plasticizers, defoamers, fillers, preservatives and/or non-polymerizable diluents or solvents. The sacrificial release layer **22** may be removable by soaking and/or a mechanical process, e.g., scrubbing, peeling, or the like.

The stretchable image layer **18** includes one or more stretchable layers containing a UV-curable (or partially or fully-cured) ink or inks. The ink(s) may be cured partly (or wholly) prior to applying the assembly **12** to the object **16** or may be wholly (or partly) cured after application, resulting in a UV-cured image layer **18**. The image layer **18** may have a thickness *t*₃ of at least 4 µm, such as up to 25 µm, or up to 10 microns, and a length of ≤ *l*₁. When transferred to the object **16**, the inks in layer **18** define an image, such as a text image, a photographic image, and/or graphics.

Exemplary UV-curable printing ink compositions suitable for forming the image layer 18 include at least one polymerizable compound, a colorant, optionally one or more curing agents, and optionally one or more auxiliary additives. The UV-curable ink composition is of a type that undergoes a polymerization reaction and curing upon exposure to a radiation source, such as a UV-emitting light emitting diode (UV LED) and which hardens when fully cured. However, the image layer **18** may still retain some ability to stretch when fully cured. By "fully cured" it means that further exposure to the radiation does not induce further polymerization. The curing agent in the ink composition may be a radiation activated initiator, e.g., a photoinitiator, which initiates polymerization of curable components of the ink, specifically of the polymerizable compound(s). Alternatively, polymerizable compounds which polymerize without the need for a curing agent may be used. The UV-curable printing ink composition may further include, as optional ingredients, one or more of waxes, solvents, plasticizers, defoamers, surfactants, fillers, reducible metal ions or metal nanoparticles, and/or preservatives. The printing ink composition may be curable by UV or electron beam radiation.

The polymerizable compound in the ink composition(s) may include one or more monomer(s) and/or oligomer(s) capable of free radical polymerization and/or prepolymers thereof. As used herein, oligomers include short polymers composed of two or more monomer units, such as up to 8 monomer units, which may be the same or different. Prepolymers are partially, but not fully-cured equivalents of the monomers and/or oligomers. The monomers and/or oligomers may possess different degrees of functionality, and a mixture including combinations of mono-, di-, tri- and higher functionality monomers, oligomers, and/or prepolymers may be used. The viscosity of the radiation-curable ink composition can be adjusted by varying the ratio between the monomers and oligomers and/or by partial curing.

Example monomers and oligomers for use in the ink composition include unsaturated monomers, such as monofunctional, di-functional, and polyfunctional acrylates, methacrylates, N-vinylamides, acrylamides, monomers which react to form polyurethanes, and combinations thereof. Example acrylates include isoamyl acrylate, stearyl acrylate, lauryl acrylate, octyl acrylate, decyl acrylate, isoamylstyl acrylate, isostearyl acrylate, 2-ethylhexyl-diglycol acrylate, 2-hydroxybutyl acrylate, 2-acryloyloxyethylhexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, vinyl ether acrylate, vinyl ether ethoxy(meth)acrylate, 2-acryloyloxyethylsuccinic acid, 2-acryloyxyethylphthalic acid, 2-acryloxyethyl-2-hydroxyethyl-phthalic acid, lactone modified flexible acrylate, and t-butylcyclohexyl acrylate, triethylene glycol diacrylate, tetraethylene glycol diacrylate, polyethylene glycol diacrylate, dipropylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethylol-tricyclodecane diacrylate, bisphenol A ethylene oxide (EO) adduct diacrylate, bisphenol A propylene oxide (PO) adduct diacrylate, hydroxypivalate neopentyl glycol diacrylate, propoxylated neopentyl glycol diacrylate, alkoxylated dimethyloltricyclodecane diacrylate and polytetramethylene glycol diacrylate, trimethylolpropane triacrylate, EO-modified trimethylolpropane triacrylate, tri(propylene glycol) triacrylate, caprolactone modified trimethylolpropane triacrylate, pentaerythritol triacrylate, pentaerithritol tetraacrylate, pentaerythritolethoxy tetraacrylate, dipentaerythritol hexaacrylate, ditrimethylolpropane tetraacrylate, glycerinpropoxy triacrylate, caprolactam modified dipentaerythritol hexaacrylate, caprolactone acrylate, cyclic trimethylolpropane formal acrylate, ethoxylated nonyl phenol acrylate, isodecyl acrylate, isooctyl acrylate, octyldecyl acrylate, alkoxylated phenol acrylate, tridecyl acrylate, alkoxylated cyclohexanone dimethanol acrylate, alkoxylated cyclohexanone dimethanol diacrylate, alkoxylated hexanediol diacrylate, dioxane glycol diacrylate, dioxane glycol diacrylate, cyclohexanone dimethanol diacrylate, diethylene glycol diacrylate neopentyl glycol diacrylate, propoxylated glycerine triacrylate, propoxylated trimethylolpropane triacrylate, ditrimethylolpropane tetraacrylate, dipentaerythritol pentaacrylate, ethoxylated pentaerythritol tetraacrylate, methoxylated glycol acrylates, 2-carboxyethyl acrylate, acrylate esters and monofunctional urethane acrylates. Example methacrylates may be used that correspond to the above-mentioned acrylates. Examples of such methacrylates include methoxypolyethylene glycol methacrylate, methoxytriethylene glycol methacrylate, hydroxyethyl methacrylate, phenoxyethyl methacrylate, cyclohexyl methacrylate, tetraethylene glycol dimethacrylate, 2-hydroxyethyl methacrylate, 2-carboxyethyl methacrylate, 2-aminoethyl methacrylate, and polyethylene glycol dimethacrylate. Example N-vinylamides include N-vinylcaprolactam and N-vinylformamide. Example acrylamides include (meth)acrylamide, acryloylmorpholine, N-isopropyl acrylamide, and dimethyl acrylamide. Example comonomers which react to form polyurethanes include a mixture of a di- or poly-isocyanate, such as isophorone diisocyanate, and a diol or polyol, such as polyol polypropylene glycol (and a subsequent endcapping of non-reacted terminal isocyanato groups, e.g., with 2-hydroxyethyl acrylate).

Another polymerizable monomer mixture is a mixture of an unsaturated carboxylic acid, such as acrylic acid, and an alkyl or alkenyl carbamate, such as ethyl carbamate or vinyl carbamate.

Other useful ethylenically unsaturated polymerizable monomers from which recurring units in the cured ink composition can be derived include urethane vinyl monomers, itaconic acid, maleic anhydride, fumaric acid, maleic acid, citraconic acid, vinyl benzoic acid, N-vinyl pyrrolidone, and vinyl phosphonic acid.

Example polymerizable compounds which polymerize without the need for a curing agent include compounds which include pendent groups able to crosslink by photocycloaddition, as described, for example, in U.S. Pub. No. 20170253051, published September 7, 2017, entitled UV-CURING METHODS FOR FORMING INK JET IMAGES, by Brust, et al.

The monomers and oligomers (including any prepolymers formed from them) may together be at least 5 wt %, or at least 10 wt %, or at least 20 wt %, or at least 50 wt %, or up to 99 wt % of the ink composition.

Example auxiliary additives include defoaming agents, dispersants, wetting agents, surfactants, leveling agents, non-polymerizable diluents or solvents, and the like. The diluent or solvent may include a liquid medium such as water or an organic solvent, such as an alkane, alcohol, ether, combination thereof, or the like.

Example colorants include pigments or dyes. Example pigments include milled pigments, including inorganic pigments, such as carbon black, titanium dioxide, cobalt blue, chrome yellow, and iron oxide, and organic pigments.

The ink composition may include a liquid diluent such as water or an organic liquid, such as an alkane, alcohol, ether, combination thereof, or the like. In some embodiments, the diluent is present at no more than 95 wt % of the ink composition, such as no more than 80 wt %, or no more than 50 wt %, or no more than 30 wt %, or no more than 10 wt %, or at least 1 wt %, or at least 5 wt %, or at least 20 wt % of the ink composition.

Example radiation-activated initiators suitable for use in the UV-curable printing ink compositions and/or adhesive layer include benzophenone, benzoin, acetophenone, thioxanthone, and acylphosphine oxide. The photoinitiator maybe at least 0.1 wt %, or at least 0.2 wt % of the respective composition, such as up to 8 wt %, or up to 4 wt %, or up to 2 wt %, or up to 1 wt %.

Exemplary stretchable UV-curable inks suited to use herein are described for example, in U.S. Pub. Nos. 20060222831, 20060275588, 20070084372, and 20120129972, and 20130337237, and WO 2008/004002. Such inks are able to stretch up to 400%, or more. Some of these references describe thermoforming UV-curable inks which can withstand heat after curing, e.g., of at least 180°C, or at least 200°C, without undergoing thermal degradation. Such inks can undergo elongation of at least 200%, or at least 250% or at least 300%, or up to 900%, when UV cured, allowing them to be used on stretchable/deformable objects.

U.S. Pub. No. 20120129972, for example, describes one suitable energy-curable thermoforming ink which includes a colorant, a monofunctional urethane acrylate monomer (a mixture of acrylic acid and ethyl carbamate), and another monofunctional monomer, such as an acrylate, e.g., an epoxy acrylate, or a vinyl monomer. The multifunctional monomer(s) of this composition are present, in total, at less than 1 wt % of the ink composition. The composition also includes a photoinitiator. The urethane monomer may be present in the ink composition at a concentration of at least 15 wt %, or at least 20 wt %, or at least 25 wt %.

Example thermoforming inks are available from Molecule, 5110-A Port Chicago Hwy, Concord, CA 94520 (https://www.molecule.ink/).

The viscosity of the uncured ink composition may be no more than 50 mPas, or no more than 20 mPas, at 50° C, such as at least 1 mPas, or at least 5 mPas.

The adhesive layer **24** may be formed from a transparent radiation curable (e.g., UV-curable) material which may be partially-cured, prior to transfer of the assembly to the object, to achieve a sticky/tacky state. In other embodiments, the adhesive layer **24** is fully cured prior to transfer. In yet other embodiments, the adhesive layer **24** is not UV-cured prior to transfer, i.e., when transferred to the object, has substantially the same viscosity as when applied to the image layer **18**. The adhesive layer **24** may have a thickness *t*₄ of at least 4 µm, such as at least 7 µm, and can be up to 25 µm, or up to 15pm, such as about 10 µm. The layer **24** may have a length of ≤ *l*₁. In some embodiments, the layer **24** is completely contiguous with the image layer **18**. In other embodiments, a part of the image layer **18** is exposed and thus is not fully covered by the adhesive layer.

In one embodiment, the adhesive layer **24** is formed from a photo-curable (e.g., UV-curable) adhesive-forming composition which includes one or more photo-curable monomers and/or oligomers (as described above) and generally a photoinitiator, which is capable of initiating free-radical polymerization of the monomers/oligomers. In some embodiments, the adhesive-forming composition may be as described above for the ink composition, without the colorant.

The adhesive layer can be jetted or flood coated onto the ink layer. For example, the adhesive layer may be formed from an adhesive-forming composition having a viscosity and a surface tension which allow the composition to be dispensed in droplet form from a printhead of an inkjet printer. The adhesive-forming composition is photo-curable by exposure to a radiation source, such as a UV-emitting light emitting diode (UV-LED). When fully photo-cured (i.e., no further polymerization occurs with further exposure to the curing radiation), the resulting adhesive layer **24** has a higher viscosity than the adhesive-forming composition but remains viscous rather than solid and is tacky. It is therefore able to wet a surface, such as the object surface **30** and maintain the ink layer attached to the surface. For example, the fully photo-cured adhesive composition may have a viscosity of at least 100,000 cP (mPa s), or at least 200,000 mPa s, or up to 10,000,000 mPa s, or up to 1,000,000 mPa s, at 25°C. All viscosities specified herein are as determined with a Brookfield Dial Reading Viscometer (serial no 200500) with an appropriate spindle for the viscosity range, available from AMETEK Brookfield, Middleboro, MA 02346 USA. See www.brookfieldengineering.com /products/viscometers/laboratory-viscometers/dial-reading-viscometer. For viscosities in this range, an RV/HB-6 spindle setting is suitably employed. In other embodiments, the fully-cured adhesive layer **24** is no longer viscous, but is a solid (i.e., does not have a measurable viscosity).

The viscosity of the uncured adhesive composition may be from 2 to 3000 mPa·s, such as up to 2000 mPa s, or up to 50 mPa·s, or at least 5 mPa·s, such as up to 30 mPa·s, at 25°C, as determined with a Brookfield Dial Reading Viscometer with an RV/HA-3 spindle setting.

Example monomers for use in the adhesive-forming composition include mono-, di-, and poly-functional acrylates, methacrylates, alkoxylated acrylates, and oligomers thereof. Examples include 1,6-hexanediol diacrylate, tripropylene glycol diacrylate, propoxylated-2-neopentyl glycol diacrylate, alkoxylated hexanediol diacrylate, trimethylol propane triacrylate, ethoxylated trimethylolpropane triacrylate, pentaerythritol tetraacrylate, polyfunctional oligomers such as epoxy acrylates, urethane acrylates and polyester acrylates, and others, as mentioned above for the ink composition.

In one embodiment, the adhesive-forming composition is free or substantially free of silicon-containing compounds, including monomers, oligomers, and polymers, such as silicones. By substantially free, it is meant that the adhesive-forming composition contains less than 2 wt %, or less than 1 wt %, or less than 0.5 wt %, or less than 0.1 wt % of silicon-containing compounds.

A method for formation of the multi-layer assembly **12** of FIGURE 1 is illustrated in FIGURES 2-4 and is further described below.

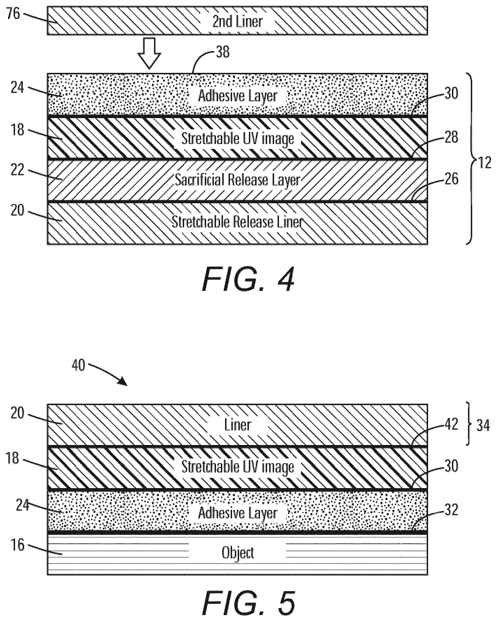

FIGURE 5 illustrates a cross-sectional view of a transfer-printed object **40** in accordance with another aspect of the exemplary embodiment. The transfer-printed object **40** can be configured as for that of FIGURE 1, except as noted. Similar elements are accorded the same numerals. In this embodiment, the sacrificial release layer **22** is omitted. In the transfer-printed object **40,** an interface **42** is defined between the release liner **20** and the image layer **18**. The release liner **20** alone serves the function of the liner and sacrificial release layer. In this case, the stretchable and UV transparent liner **20** can be one to which the UV ink will not strongly adhere. For example, LDPE's which have a surface tackiness may be used. The UV ink composition may be selected so that it does not develop a strong adhesion to the release liner when cured. The liner can then be removed after transfer due to lower bonding strength. Another suitable stretchable, UV transparent liner **20** is one which is water-soluble and/or water-dispersible. Examples include PVOH film. After transfer, such a liner can be removed through washing or/and scrubbing with water.

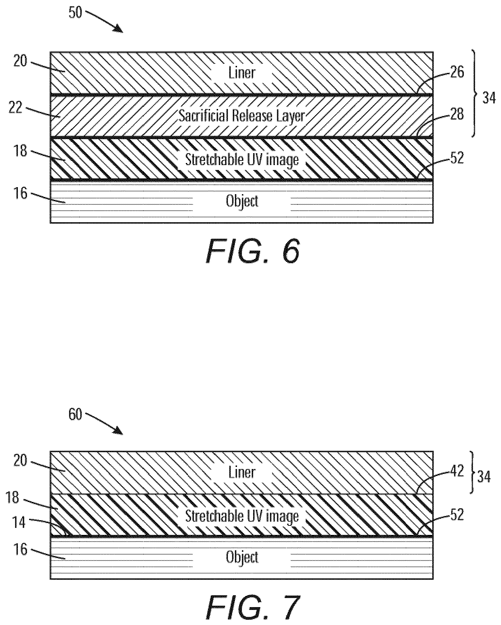

FIGURE 6 illustrates a cross-sectional view of a transfer-printed object **50** in accordance with another aspect of the exemplary embodiment. The transfer-printed object **50** can be configured as for that of FIGURE 1, except as noted. Similar elements are accorded the same numerals. In this embodiment, the adhesive layer **24** is omitted. In the transfer-printed object **50**, an interface **52** is defined between the image layer **18** and the object **16**. The UV image is only partially cured (pinned to the carrier), instead of fully cured, prior to transfer of the assembly to the object. Inks of all colors in all areas are thus in a partially cured tacky/sticky state.

FIGURE 7 illustrates a cross-sectional view of a transfer-printed object **60** in accordance with another aspect of the exemplary embodiment. The transfer-printed object **60** can be configured as for that of FIGURE 1, except as noted. Similar elements are accorded the same numerals. In this embodiment, the adhesive layer **24** and the sacrificial layer **22** are both omitted. In the transfer-printed object **60**, an interface **42** is defined between the liner **20** and the image layer **18** and an interface **52** is defined between the image layer **18** and the object **16**. The UV image is formed from inks which do not adhere strongly to the liner **20**, or where the liner is water soluble/dispersible, as for the embodiment of FIGURE 5. As for the embodiment of FIGURE 6, the UV image is only partially cured (pinned to the carrier), instead of fully cured, prior to transfer of the assembly to the object. Inks of all colors in all areas are thus in a partially cured tacky/sticky state.

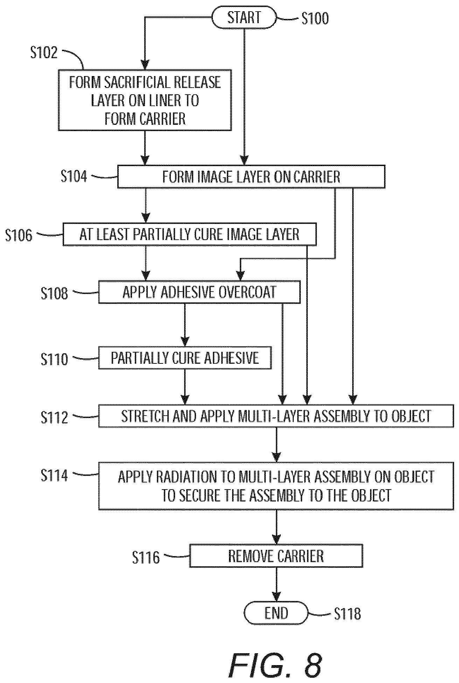

FIGURE 8 illustrate a method for forming the transfer-printed object **10** of any one of FIGURES 1 and 5-7. The method begins at S100.

At S102, a sacrificial release layer **22** is optionally formed on the liner **20**, which at this stage may be in a roll or sheet form (FIG. 2). This may include coating a stretchable/UV transparent liner **20** with a film-forming material. In the exemplary embodiment, the material is applied directly to an entire first planar surface **70** of the liner. The material used to form the sacrificial layer **22** may be coated onto the liner **20** by extrusion, knife coating, solvent coating, casting, or other suitable coating method. The sacrificial layer material be a solid, semisolid, or a tacky liquid at room temperature. Optionally, the material is heated to above room temperature prior to or during application to the liner **20** to reduce its viscosity. The sacrificial layer material on the liner **20** may be dried and/or cured, e.g., photo-cured with UV radiation, to form the sacrificial layer **22** which thus defines an interface **26** with the liner **20**. The liner and optional sacrificial release layer form a carrier **34** for supporting the image layer **18**. The stretchable release liner **20** and the sacrificial layer **22** may be pre-assembled to form the carrier **34** before printing with the image layer **18**.

At S104, a stretchable UV-curable image layer **18** is formed on the carrier **34**. For example, one or more UV-curable ink compositions is/are applied to an exposed surface **72** of the sacrificial release layer **22** using a suitable (e.g., inkjet) printing method. If no sacrificial release layer **22** is employed, the UV-curable ink compositions may be applied directly to the liner **20**. The UV-curable ink compositions is/are applied in a pattern which defines an image when applied to the object **16**. As will be appreciated, the image layer **18** may completely cover the carrier **34**, as shown in FIGURE 3, or only partially cover the carrier.

In one embodiment, at S106, the image layer **18** is partially (or wholly) photo-cured, e.g., with UV or other radiation. In the exemplary embodiment, at least part of the curing of the image layer **18** is performed after application of the assembly **12** to the object **16**.

At S108, a clear UV-curable adhesive overcoat layer **24** may be applied over the stretchable UV-curable image layer **18** (FIG. 4). In the embodiment of FIGURES 2-4, the adhesive overcoat layer **24** is applied to an upper surface **74** of the image layer **18** to define the adhesive second surface **38** of the assembly **12**. In the embodiments of FIGURES 6 and 7, this step is omitted and the UV-curable image layer **18** defines the adhesive second surface of the assembly. In other embodiments, the adhesive overcoat is applied to only a portion of the area of the liner to leave the image layer **18** at least partially exposed and thus forming a part of the adhesive second surface **38**.

At S110, the adhesive overcoat, if used, may be partially cured (e.g., at low power) to attain a sticky state.

Alternatively, the image layer **18** may be adhesive, thus avoiding the need for an adhesive layer **24**. For example, S108-S110 may be omitted and/or a partial, but not full, curing of the image layer is performed at S106.

In some embodiments, as illustrated in FIGURE 4, a second liner **76** may be temporarily applied over the adhesive layer **24** (or the adhesive ink layer **18**, if an adhesive layer is not used) to protect the adhesive layer/adhesive ink during transport and/or storage. The second liner **76** is peeled away before applying the assembly **12** to the object. The second liner **76** need not be stretchable and can be formed from any suitable material, such as a silicone-coated substrate. The substrate may be formed of paper and/or plastic.

At S112, the image assembly **12** (carrier **32**, image **18** and the adhesive layer **24,** where used) is then stretched (as necessary) and pressed against the object surface **14** to at least temporarily adhere the assembly **12** to the contours of the object surface, with the adhesive layer **24** (or adhesive ink when an adhesive layer is not used) in full contact with the object **16** (FIG 1).

At S114, UV or other curing radiation is contemporaneously and/or subsequently applied through the structure **12** (in the direction of the arrow shown in FIGURE 1) to cause the image to adhere to the object. In this step, the image layer **18** and/or the adhesive layer **24,** where present, is/are photo-cured and full adhesion strength is established.

At S116, the carrier **32** is removed to expose the UV-cured image **18**. This step may include peeling off the liner **20** and/or may further include removing remains of the sacrificial release layer **22**, e.g., by washing, scrubbing or the like, the assembly, optionally aided by a suitable liquid medium, such as water.

The method ends at S118.

By using a stretchable and transparent (to UV) transfer liner **20** and a set of stretchable UV inks, a stretchable UV image assembly **12** is created that can be stretched to fit a wide range of object surfaces. Transfer of the UV images can be readily achieved through adhesion and curing. The liner **20** is thereafter removed to expose the UV image. In one embodiment, the object surface **14**, with the cured image thereon, can be further stretched (deformed), without image cracking, because the UV image remains stretchable.

Suitable methods for applying the UV-curable ink composition(s) (S104) include drop-on-demand or continuous systems. In drop-on-demand systems, a droplet is expelled from the orifice of a printhead directly to a position on a recording medium (in this case, the carrier **32**). A droplet is not formed or expelled unless it is to be placed on the recording medium. One example of such a drop-on-demand system is known as thermal ink jet (TIJ), or bubble jet printing. It produces high velocity droplets by passing a current pulse through a resistive layer within the ink passageway near the nozzle, causing the ink vehicle in the immediate vicinity to vaporize and expel droplets of ink from the nozzle. Another example of a drop-on-demand system is piezoelectric ink jet (PIJ) printing. In such a system, the printhead has an ink filled channel or passageway having a nozzle on one end and a piezoelectric transducer near the other end. The piezoelectric transducer produces pressure pulses which expel drops of ink from the nozzle. Another example of a drop-on-demand system is known as acoustic ink printing. An acoustic beam exerts a radiation pressure against objects upon which it impinges. Thus, when an acoustic beam impinges on a free surface (i.e., liquid/air interface) of a pool of liquid from beneath, the acoustic pressure which it exerts against the surface of the pool may reach a sufficiently high level to release individual droplets of liquid from the pool, despite the restraining force of surface tension. Focusing the beam on or near the surface of the pool intensifies the acoustic pressure it exerts for a given amount of input power. Ink jet printing is described, for example, in U.S. Pub. No. 20100055484.

Without intending to limit the scope of the exemplary embodiments, the following example illustrates preparation of a radiation-cured object.

### EXAMPLE

A 25 µm LDPE film is used as the liner **20**. A layer of Elmer's^{®} glue (a polyvinyl acetate (PVAC) glue) is applied onto the LDPE film and dried to provide the sacrificial layer **22**. A layer of thermo-forming UV-curable ink, obtained from Molecule, 5110-A Port Chicago Hwy, Concord, CA 94520, is applied and cured. The thermoforming ink is known to be able to stretch up to 400%. To form the adhesive layer **24**, a UV-curable clear ink is applied and partially cured (at 20% power) to attain a sticky state.

The image assembly **12** thus formed is stretched and pressed against a curved polyethylene terephthalate (PET) surface **14**. Full power UV exposure is applied through the image structure **12** to cause the clear UV adhesive layer **24** to cure. The LDPE liner **22** is peeled off. In this particular case, the liner and the sacrificial layer separated easily. A damped cloth is used to remove the PVAC glue residues of the sacrificial layer **22** from the top surface of the fully-cured image layer 18.

Advantages of some or all of the illustrated embodiments may include:
1. Transfer printing enables the transfer of images onto curved objects, large objects, spherical objects and the like.
2. Images can be transferred onto stretchable objects.
3. The method enables water-based cleaning and finishing.

## Claims

1. A stretchable multi-layer assembly for transfer-printing of an associated curved object, comprising:
a stretchable carrier which defines a first outer surface of the assembly;
a stretchable image supported on the carrier;
the multi-layer assembly including an adhesive second outer surface defined by at least one of the stretchable image and an adhesive layer;
the carrier and the stretchable image being penetrable to radiation that cures the adhesive second outer surface for securing the assembly to an associated object.

2. The assembly of claim 1, wherein the multi-layer assembly includes the adhesive layer and wherein the adhesive layer is UV-curable.

3. The assembly of claim 1, wherein the stretchable image is UV-curable.

4. The assembly of claim 1, wherein the carrier includes a release liner.

5. The assembly of claim 4, wherein the release liner has a thickness of up to 50 µm.

6. The assembly of claim 4, wherein the release liner is formed from a polyalphaolefin, polyvinyl alcohol, polyvinyl acetate, natural rubber latex, synthetic polyisoprene, or combination thereof.

7. The assembly of claim 4, wherein the release liner is in contact with the stretchable image.

8. The assembly of claim 4, wherein the carrier further includes a sacrificial release layer, intermediate the release liner and the stretchable image.

9. The assembly of claim 8, wherein the sacrificial release layer is water soluble or water dispersible.

10. The assembly of claim 8, wherein the sacrificial release layer is a water-soluble polyvinyl acetate glue.

11. The assembly of claim 1, wherein the stretchable image comprises at least one UV-curable ink, which is optionally partially UV-cured.

12. The assembly of claim 1, wherein at least one of the stretchable image and the adhesive layer comprises or is derived from at least one UV-curable monomer.

13. The assembly of claim 12, wherein the at least one UV-curable monomer includes a monomer which forms a polyurethane when radiation cured.

14. A transfer-printed object comprising an object and the assembly of claim 1 attached to a surface of the object.

15. A method of forming a transfer-printed object, comprising:
providing the multi-layer assembly of claim 1;
stretching the multi-layer assembly;
applying the multi-layer assembly to an object;
curing at least one of the adhesive layer and the stretchable image with radiation through the carrier; and
after the curing, removing the carrier.

16. The method of claim 15, wherein the carrier comprises a release liner and a water-soluble or water dispersible sacrificial release layer and wherein the removing of the carrier includes removing the sacrificial release layer with water.

17. A method of forming a multi-layer assembly, comprising:
providing a stretchable carrier;
forming a stretchable image layer on the stretchable carrier;
providing the multi-layer assembly with an adhesive outer surface,
wherein the carrier and the image layer are penetrable to radiation that cures the adhesive outer surface for securing the assembly to an object.

18. The method of claim 17, wherein the providing of the stretchable carrier comprises forming a sacrificial release layer on the liner, the sacrificial release layer being removable with a liquid medium to expose the stretchable image layer.

19. A stretchable multi-layer assembly for transfer-printing an object, comprising:
a UV-curable stretchable image layer;
a UV-transmissive stretchable carrier which supports the image layer, comprising:
a release liner which defines a first outer surface of the assembly, and
a water soluble or water dispersible sacrificial release layer, intermediate the release liner and the stretchable image layer;
the multilayer assembly including a second surface defined by at least one of the stretchable image layer and an adhesive layer, which is curable by UV radiation passing through the stretchable carrier and stretchable image layer.

## Patentansprüche

1. Dehnbarer mehrschichtiger Aufbau zum Transferdrucken eines zugehörigen gekrümmten Objekts, umfassend:
einen dehnbaren Träger, der eine erste Außenfläche des Aufbaus definiert; und
ein dehnbares Bild, das auf dem Träger getragen wird;
wobei der mehrschichtige Aufbau eine haftende zweite Außenfläche umfasst, die durch das dehnbare Bild und/oder eine Haftschicht definiert ist; und
der Träger sowie das dehnbare Bild für Strahlung durchlässig sind, die die haftende zweite Außenfläche aushärtet, um den Aufbau an einem zugehörigen Gegenstand zu befestigen.

2. Aufbau nach Anspruch 1, bei dem die mehrschichtige Baugruppe die Haftschicht umfasst und die Haftschicht UV-aushärtbar ist.

3. Aufbau nach Anspruch 1, bei dem das dehnbare Bild UV-aushärtbar ist.

4. Aufbau nach Anspruch 1, bei dem der Träger eine Trennfolie umfasst.

5. Aufbau nach Anspruch 4, bei dem die Trennfolie eine Dicke von bis zu 50 µm aufweist.

6. Aufbau nach Anspruch 4, bei dem die Trennfolie aus einem Polyalphaolefin, Polyvinylalkohol, Polyvinylacetat, Naturkautschuklatex, synthetischem Polyisopren oder einer Kombination daraus ausgebildet ist.

7. Aufbau nach Anspruch 4, bei dem die Trennfolie in Kontakt mit dem dehnbaren Bild steht.

8. Aufbau nach Anspruch 4, bei dem der Träger zudem eine Opfertrennschicht zwischen der Trennfolie und dem dehnbaren Bild umfasst.

9. Aufbau nach Anspruch 8, bei dem die Opfertrennschicht wasserlöslich oder wasserdispergierbar ist.

10. Aufbau nach Anspruch 8, bei dem die Opfertrennschicht ein wasserlöslicher Polyvinylacetat-Klebstoff ist.

11. Aufbau nach Anspruch 1, bei dem das dehnbare Bild wenigstens eine UV-aushärtbare Tinte umfasst, die optional teilweise UV-ausgehärtet ist.

12. Aufbau nach Anspruch 1, bei dem das dehnbare Bild und/oder die Haftschicht wenigstens ein UV-aushärtbares Monomer umfasst oder daraus gewonnen wird.

13. Aufbau nach Anspruch 12, bei dem das wenigstens eine UV-aushärtbare Monomer ein Monomer umfasst, das bei Strahlungsaushärten ein Polyurethan ausbildet.

14. Ein durch Transferdruck bedruckter Gegenstand, der einen Gegenstand und den Aufbau nach Anspruch 1 umfasst, der an einer Oberfläche des Gegenstandes angebracht ist.

15. Verfahren zum Ausbilden eines im Transferdruckverfahren bedruckten Objekts, umfassend:
Bereitstellen des mehrschichtigen Aufbaus nach Anspruch 1;
Dehnen des mehrschichtigen Aufbaus;
Aufbringen des mehrschichtigen Aufbaus auf ein Objekt;
Aushärten der Haftschicht und/oder des dehnbaren Bildes mit Strahlung durch den Träger; und,
nach dem Aushärten, Entfernen des Trägers.

16. Verfahren nach Anspruch 15, bei dem der Träger eine Trennfolie und eine wasserlösliche oder wasserdispergierbare Opfertrennschicht umfasst und das Entfernen des Trägers das Entfernen der Opfertrennschicht mit Wasser umfasst.

17. Verfahren zum Herstellen eines mehrschichtigen Aufbaus, umfassend:
Bereitstellen eines dehnbaren Trägers;
Ausbilden einer dehnbaren Bildschicht auf dem dehnbaren Träger;
Versehen des mehrschichtigen Aufbaus mit einer haftenden Außenfläche, wobei der Träger und die Bildschicht für Strahlung durchlässig sind, die die haftende Außenfläche aushärtet, um den Aufbau an einem Objekt zu befestigen.

18. Verfahren nach Anspruch 17, bei dem das Bereitstellen des dehnbaren Trägers das Ausbilden einer Opfertrennschicht auf der Folie umfasst, wobei die Opfertrennschicht mit einem flüssigen Medium entfernt werden kann, um die dehnbare Bildschicht freizulegen.

19. Dehnbarer mehrschichtiger Aufbau zum Transferdrucken eines Objekts, umfassend:
eine UV-aushärtbare, dehnbare Bildschicht;
einen UV-durchlässigen, dehnbaren Träger, der die Bildschicht trägt, umfassend:
eine Trennfolie, die eine erste Außenfläche des Aufbaus definiert, und
eine wasserlösliche oder wasserdispergierbare Opfertrennschicht, die zwischen der Trennfolie und der dehnbaren Bildschicht liegt;
wobei der mehrschichtige Aufbau eine zweite Oberfläche aufweist, die durch die dehnbare Bildschicht und/oder eine Haftschicht definiert ist, die durch UV-Strahlung aushärtbar ist, den dehnbaren Träger und die dehnbare Bildschicht durchläuft.

## Revendications

1. Assemblage multicouche étirable pour l'impression par transfert d'un objet courbé associé, comprenant :
un support étirable qui définit une première surface extérieure de l'assemblage ;
une image étirable supportée sur le support ;
l'assemblage multicouche comprenant une deuxième surface extérieure adhésive définie par au moins l'une parmi l'image étirable et une couche adhésive ;
le support et l'image étirable étant pénétrables à un rayonnement qui durcit la deuxième surface extérieure adhésive pour fixer l'assemblage à un objet associé.

2. Assemblage selon la revendication 1, dans lequel l'assemblage multicouche comprend la couche adhésive et dans lequel la couche adhésive est durcissable aux UV.

3. Assemblage selon la revendication 1, dans lequel l'image étirable est durcissable aux UV.

4. Assemblage selon la revendication 1, dans lequel le support comprend une doublure antiadhésive.

5. Assemblage selon la revendication 4, dans lequel la doublure antiadhésive a une épaisseur allant jusqu'à 50 µm.

6. Assemblage selon la revendication 4, dans lequel la doublure antiadhésive est formée à partir d'une poly(alpha-oléfine), d'un poly(alcool vinylique), d'un poly(acétate de vinyle), d'un latex de caoutchouc naturel, d'un polyisoprène synthétique, ou d'une combinaison de ceux-ci.

7. Assemblage selon la revendication 4, dans lequel la doublure antiadhésive est en contact avec l'image étirable.

8. Assemblage selon la revendication 4, dans lequel le support comprend en outre une couche antiadhésive sacrificielle, intermédiaire entre la doublure antiadhésive et l'image étirable.

9. Assemblage selon la revendication 8, dans lequel la couche antiadhésive sacrificielle est soluble dans l'eau ou dispersible dans l'eau.

10. Assemblage selon la revendication 8, dans lequel la couche antiadhésive sacrificielle est une colle de poly(acétate de vinyle) soluble dans l'eau.

11. Assemblage selon la revendication 1, dans lequel l'image étirable comprend au moins une encre durcissable aux UV, qui est éventuellement partiellement durcie aux UV.

12. Assemblage selon la revendication 1, dans lequel au moins l'une parmi l'image étirable et la couche adhésive comprend ou dérive d'au moins un monomère durcissable aux UV.

13. Assemblage selon la revendication 12, dans lequel l'au moins un monomère durcissable aux UV comprend un monomère qui forme un polyuréthane lorsqu'il est durci par irradiation.

14. Objet imprimé par transfert comprenant un objet et l'assemblage de la revendication 1 attaché à une surface de l'objet.

15. Procédé de formation d'un objet imprimé par transfert, comprenant :
la fourniture de l'assemblage multicouche de la revendication 1 ;
l'étirage de l'assemblage multicouche ;
l'application de l'assemblage multicouche sur un objet ;
le durcissement d'au moins l'une parmi la couche adhésive et l'image étirable avec un rayonnement à travers le support ; et
après le durcissement, l'élimination du support.

16. Procédé selon la revendication 15, dans lequel le support comprend une doublure antiadhésive et une couche antiadhésive sacrificielle soluble dans l'eau ou dispersible dans l'eau et dans lequel l'élimination du support comprend l'élimination de la couche antiadhésive sacrificielle avec de l'eau.

17. Procédé de formation d'un assemblage multicouche, comprenant :
la fourniture d'un support étirable ;
la formation d'une couche d'image étirable sur le support étirable ;
la dotation d'une surface extérieure adhésive à l'assemblage multicouche,
dans lequel le support et la couche d'image sont pénétrables à un rayonnement qui durcit la surface extérieure adhésive pour fixer l'assemblage à un objet.

18. Procédé selon la revendication 17, dans lequel la fourniture du support étirable comprend la formation d'une couche antiadhésive sacrificielle sur la doublure, la couche antiadhésive sacrificielle étant éliminable avec un milieu liquide pour exposer la couche d'image étirable.

19. Assemblage multicouche étirable pour imprimer par transfert un objet, comprenant :
une couche d'image étirable durcissable aux UV ;
un support étirable transmettant les UV qui supporte la couche d'image, comprenant :
une doublure antiadhésive qui définit une première surface extérieure de l'assemblage, et
une couche antiadhésive sacrificielle soluble dans l'eau ou dispersable dans l'eau, intermédiaire entre la doublure antiadhésive et la couche d'image étirable ;
l'assemblage multicouche comprenant une deuxième surface définie par au moins l'une parmi la couche d'image étirable et une couche adhésive, qui est durcissable par un rayonnement UV traversant le support étirable et la couche d'image étirable.
